(19) Europäisches Patentamt
European Patent Office
Office européen des brevets

(11) **EP 1 955 911 B1**

(12) **EUROPÄISCHE PATENTSCHRIFT**

(45) Veröffentlichungstag und Bekanntmachung des Hinweises auf die Patenterteilung:
**01.05.2013 Patentblatt 2013/18**

(21) Anmeldenummer: **08100293.3**

(22) Anmeldetag: **10.01.2008**

(51) Int Cl.:
***B60R 21/34*** *(2011.01)*  ***B60R 21/0132*** *(2006.01)*

(54) **Verfahren und Vorrichtung zur Ansteuerung von Personenschutzmitteln**

Device and method for controlling occupant security devices

Dispositif et procédé destinés à la commande de moyens de protection d'occupants

(84) Benannte Vertragsstaaten:
**DE ES FR GB**

(30) Priorität: **12.02.2007 DE 102007006769**

(43) Veröffentlichungstag der Anmeldung:
**13.08.2008 Patentblatt 2008/33**

(73) Patentinhaber: **ROBERT BOSCH GMBH**
**70469 Stuttgart (DE)**

(72) Erfinder:
• **Lang, Gunther**
**70563 Stuttgart (DE)**
• **Mack, Frank**
**Yongsan-Ku, Seoul 140-894 (KR)**

(56) Entgegenhaltungen:
WO-A1-2005/036108    WO-A1-2006/125719
WO-A1-2007/082865    DE-A1- 19 817 780

EP 1 955 911 B1

**Beschreibung**

Stand der Technik

Die Erfindung betrifft ein Verfahren bzw. eine Vorrichtung zur Ansteuerung von Personenschutzmitteln nach der Gattung der unabhängigen Patentansprüche.

Eine derartige Gattung ist aus dem WO-A-2005/036108 bekannt. Dieses Dokument offenbart ein Verfahren zur Ansteuerung von Personenschutzmitteln in Abhängigkeit von einer Auswertung von wenigstens einem Unfallsignal

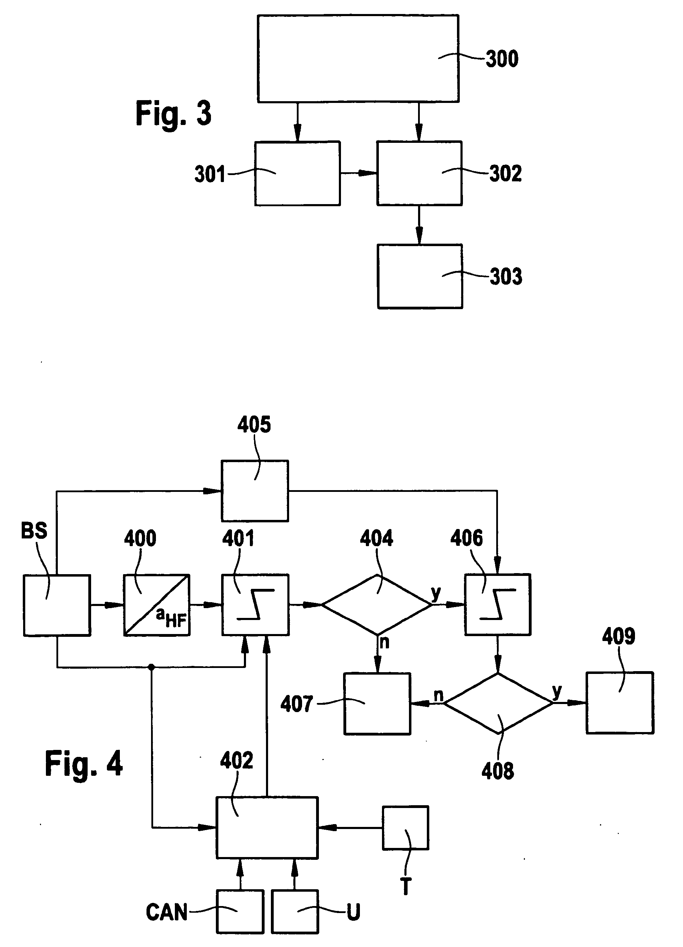

- wobei die Auswertung in Abhängigkeit von dem nach zwei Frequenzbereichen aufgeteilten Unfallsignals beeinflusst wird
- und wobei sich die zwei Frequenzbereiche in wenigstens einem dritten Frequenzbereich Unterscheiden (vgl. Seite 15, Zeilen 5-27, Abbildungen 4a-4b).

Dieses Verfahren wird dazu benutzt, den Aufprallort des Hindernisses zu bestimmen.

Aus DE 10 2004 042 467 A1 ist bereits ein Verfahren und eine Vorrichtung zur Erzeugung eines Auslösesignals für eine Fußgängerschutzvorrichtung bekannt. Dabei wird eine Auslöseüberprüfung und eine Plausibilitätsprüfung der Sensordaten durchgeführt, wobei bei der Auslöseprüfung zur Erkennung eines Fußgängers mit den Sensordaten eine Merkmalsextraktion und/oder eine Offseterkennung ausgeführt werden, welche einen Auftreffpunkt des Objekts bestimmt, wobei das Auslösesignal für die Fußgängerschutzvorrichtung erzeugt wird, wenn bei der Auslöseüberprüfung eine Kollision mit einem Fußgänger erkannt wird und die Plausibilitätsprüfung der Sensordaten positiv ist.

Offenbarung der Erfindung

Die erfindungsgemäße Vorrichtung bzw. das erfindungsgemäße Verfahren zur Ansteuerung von Personenschutzmitteln mit den Merkmalen der unabhängigen Patentansprüche haben demgegenüber den Vorteil, dass die Ansteuerungsentscheidung robuster wird und in Bezug auf Fußgängerschutzmittel eine genauere und bessere Objektunterscheidung möglich wird. Dies hängt daran, dass nunmehr die Dynamik des Unfallsignals dazu benutzt wird, die Auswertung des Unfallsignals, vorzugsweise des Beschleunigungs- oder Körperschallsignals, zu beeinflussen. Dabei kommt es zu einer Verhältnisbetrachtung von zwei Frequenzbereichen des Unfallsignals, die sich wenigstens in einem dritten Bereich unterscheiden. D. h. beispielsweise, dass der hochfrequente Anteil des Unfallsignals wird in Verhältnis gesetzt zum niederfrequenten Anteil des Unfallsignals oder zum gesamten Unfallsignal. D. h. dass sich die zwei Frequenzbereiche überlappen können, aber das zumindest ein Frequenzbereich den dritten Frequenzbereich außerhalb dieser Überlappung hat.

Es kann eine Verhältnisbildung, beispielsweise durch eine Division tatsächlich durchgeführt werden oder es wird der Nenner der Division dazu benutzt, einen Schwellwert zu bewerten und dann den Vergleich durchzuführen. Es sind jedoch auch andere Methoden möglich, um diese Verhältnisbetrachtung durchzuführen.

Der Erfindung liegt die Erkenntnis zugrunde, dass sich beispielsweise eine Steifigkeit eines Objekts in der Frequenzverteilung des bei einer Kollision auftretenden Beschleunigungssignals widerspiegelt. Die Eigenfrequenz einer Schwingung ist in einem einfachen Federmodell proportional zur Wurzel der Federkonstanten. Bei harten Objekten ist der hochfrequente Signalanteil also ausgeprägter als bei weichen Objekten. Die Auswertung der hochfrequenten Signaldynamik erlaubt daher Rückschlüsse auf die Härte des Objekts.

Neben der Detektion von Fußgängern kann mit der vorliegenden Erfindung auch die Detektion von Fahrzeugcrashs verbessert werden. Auslösecrashs unterscheiden sich von Nichtauslösecrashs und Misuseobjekten häufig in der Frequenzcharakteristik, also der Signaldynamik der Unfallsignale, vorzugsweise der Beschleunigungssignale. Die Signaldynamik wird durch die Abfolge der Bruchvorgänge in der Knautschzone bestimmt. Nichtauslösecrashs weisen wegen der geringen Crashgeschwindigkeit und den daher langsamer ablaufenden Bruchvorgängen in der Regel niederfrequentere Beschleunigungssignale als Auslösecrahs auf. Auch Misuseobjekte haben häufig Frequenzcharakteristiken, die sich deutlich von Crashsignalen unterscheiden. Sie können zum einen niederfrequenter, z. B. Kieshaufen, zum Teil aber auch höherfrequenter, z. B. Hammerschläge, als Crashsignale sein.

Ziel der Erfindung ist es, diese unterschiedlichen Frequenzverteilungen im Unfallsignal, vorzugsweise Beschleunigungssignal durch Auswertung der hochfrequenten Signaldynamik zu erkennen. Für Frontcrashs am geeignetsten ist dafür beispielsweise der in Fahrtlängsrichtung empfindliche Beschleunigungssensor im zentralen Airbagsteuergerät. Es ist aber auch denkbar, die Frequenzen eines Querbeschleunigungssignals oder der sogenannten Upfrontsensoren oder der Seitenaufprallsensoren auszuwerten. Die so erhaltene Signaldynamikinformation kann dann benutzt werden, um den weiterhin auf Basis von Unfallsignalen und deren ersten und zweiten Integralen bei Beschleunigungssignalen arbeitenden Hauptalgorithmus durch Anpassung der Auslöseschwellen zu beeinflussen. Der Eingriff in den Hauptalgorithmus kann prinzipiell in derselben Weise erfolgen, wie auch sonstige Zusatzalgorithmen auf den Hauptalgorithmus einwirken.

Daher wird bezüglich des Fußgängerschutzes durch das erfindungsgemäße Verfahren bzw. die erfindungsgemäße Vorrichtung eine genauere und robustere Unterscheidung zwischen einem Fußgängeraufprall und Objekten, die sich von der Steifigkeit von Fußgängern unterscheiden, gewährleistet. Z. B. können so harte Objekte aus Metalls von Fußgängern unterschieden werden.

Dadurch wird auf der einen Seite das Schutzpotential für Fußgänger erhöht und auf der anderen Seite die Kosten, die durch eine ungewollte Auslösung entstehen können, eingespart. Außerdem wird es verhindert, dass der Fahrer durch eine Auslösung, z. B. das Aufstellen der Fronthaube irritiert und in seinem Lenkverhalten beeinträchtigt wird.

Durch das erfindungsgemäße Verfahren wird eine genauere und robustere Unterscheidung zwischen Auslösecrashs und Nichtauslösecrashs, sowie Misuseobjekten ermöglicht. Dadurch wird das Schutzpotential von Sicherheitssteuergeräten, wie Airbagsteuergeräten, verbessert und das Risiko ungewollter Fehlauslösung weiter verringert.

Durch die in den abhängigen Ansprüchen aufgeführten Maßnahmen und Weiterbildungen sind vorteilhafte Verbesserungen des in den unabhängigen Patentansprüchen angegebenen Verfahrens zur Ansteuerung von Personenschutzmitteln, bzw. der in den unabhängigen Patentansprüchen angegebenen Vorrichtung zur Ansteuerung von Personenschutzmitteln möglich.

Besonders vorteilhaft ist, dass das Verhältnis aus einem hochfrequenten und/oder einem niederfrequenten Anteil und/oder dem gesamten Unfallsignal gebildet wird. Da die Summe aus dem hochfrequenten und dem niederfrequenten Anteil das gesamte Unfallsignal ergibt, ist leicht einzusehen, dass ein jeweiliger Austausch möglich ist. Notwendig ist hierbei jedoch eine zeitliche Verzögerung des hochfrequenten bzw. gesamten Unfallsignals, um eine bessere Unterscheidung zwischen den Frequenzen zu erreiche. Weiterhin ist es vorteilhaft, dass die Dynamik des Beschleunigungssignals beziehungsweise eines hoch- oder niederfrequenten Anteils davon durch absolute Aufsummation des Beschleunigungssignals beziehungsweise eines hoch- oder niederfrequenten Anteils davon bestimmt wird. Es sind jedoch auch andere Methoden möglich.

Die Beeinflussung der Auswertung kann vorteilhafter Weise dadurch erreicht werden, dass ein Schwellwert oder mehrere Schwellwerte in Abhängigkeit von dem Verhältnis verändert werden.

Weiterhin ist es vorteilhaft, dass die Beeinflussung in Abhängigkeit von einem Schwellwertvergleich durchgeführt wird, indem das Verhältnis mit einem Schwellwert verglichen wird. Dies kann auch unter Vermeidung einer Division, wie unten dargestellt wird, geschehen. Hier erfolgt die Bewertung durch den Schwellwertvergleich, so dass damit klar wird, ob ein Auslösefall oder ein Nichtauslösefall vorliegt oder um welches Objekt es sich bezüglich seiner Steifigkeit handelt.

Weiterhin ist es vorteilhaft, dass, wenn in einem vorgegebenen Zeitfenster das erfindungsgemäße Verfahren abläuft, ein Zähler gestartet wird, der in Abhängigkeit von dem Vergleich des Verhältnisses mit dem zweiten Schwellwert inkrementiert wird. D. h. solange der zweite Schwellwert überschritten wird oder wenn er mehrfach überschritten wird, wird der Zähler inkrementiert. Erst wenn dieser Zähler einen weiteren Schwellwert übersteigt, wird die Schwellenüberschreitung des Verhältnisses akzeptiert. Dies sorgt für eine erhöhte Robustheit des Ergebnisses, denn die Signale können ein Einschwingverhalten aufweisen.

Werden mehrere Unfallsignale von mehreren Sensoren verwendet, dann kann eine gewichtete Summe für das Verhältnis gebildet werden. Die Gewichtung kann auch in Abhängigkeit von den Signalen oder Signalanteilen durchgeführt werden. Damit kann dann beispielsweise ein Sensor, der besonders nah an der Aufprallstelle ist, besonders stark gewichtet werden.

Der zweite Schwellwert, der für das Verhältnis zum Vergleich herangezogen wird, kann in Abhängigkeit von einer Fahrzeuggeschwindigkeit, die beispielsweise über den CAN-Bus erhältlich ist oder eines Auftreffpunktes des Aufprallobjekts oder einer Umgebungstemperatur verändert werden. Damit kann bezüglich der Fahrzeuggeschwindigkeit auf die Unfallschwere bezüglich des Auftreffpunkts auch auf die Auswirkung bezüglich der Crashschwere und bezüglich der Umgebungstemperatur auf die Reaktion der Sensorik am Stoßfänger eingegangen werden.

Die erfindungsgemäße Vorrichtung weist eine Schnittstelle auf, die hard- und/oder softwaremäßig ausgeführt sein kann. Diese Schnittstelle kann softwaremäßig sich als Softwaremodul auf einem Mikrocontroller und dort im Arbeitsspeicher befinden oder sie kann beispielsweise als integrierter Schaltkreis im Steuergerät angeordnet sein. An diese Schnittstelle ist dann die Unfallsensorik anschließbar. Bei der Auswerteschaltung handelt es sich üblicherweise um einen Mikrocontroller, der aber auch durch jeden anderen Prozessortyp ersetzbar ist. Auch eine andere integrierte Schaltung oder eine diskret aufgebaute Auswerteschaltung sind möglich. Auch bei der Ansteuerungsschalten kann es sich um einen integrierten Schaltkreis handeln, der Leistungsschalter aufweist und gegebenenfalls eine Logik hat, um Verknüpfungen durchzuführen. Es ist möglich, diesen integrierten Schaltkreis um diskrete Elemente zu erweitern oder völlig diskret aufzubauen.

Ausführungsbeispiele der Erfindung sind in der Zeichnung dargestellt und werden in der nachfolgenden Beschreibung näher erläutert. Es zeigen:

Figur 1    ein Blockschaltbild der erfindungsgemäßen Vorrichtung,

Figur 2       Softwaremodule des Mikrocontrollers,

Figur 3       ein Flussdiagramm des erfindungsgemäßen Verfahrens,

Figur 4       ein erstes Signalablaufdiagramm,

Figur 5       ein zweites Signalablaufdiagramm,

Figur 6       ein Steifigkeit-Massediagramm,

Figur 7       ein erstes Signalzeitdiagramm,

Figur 8       ein zweites Signalzeitdiagramm,

Figur 9       ein drittes Signalzeitdiagramm,

Figur 10      ein viertes Signalzeitdiagramm,.

Figur 11      ein fünftes Signalzeitdiagramm,

Figur 12      ein sechstes Signalzeitdiagramm,

Figur 13      ein siebtes Signalzeitdiagramm,

Figur 14      ein achtes Signalzeitdiagramm,

Figur 15      ein neuntes Signalzeitdiagramm und

Figur 16      ein zehntes Signalzeitdiagramm.

Das erfindungsgemäße Verfahren bzw. die erfindungsgemäße Vorrichtung mit den Merkmalen der unabhängigen Patentansprüche nutzen die Signaldynamik, insbesondere im hohen Frequenzbereich. Diese Signaldynamik wird dazu verwendet, um einen Ansteuerungsalgorithmus für ein Personenschutzmittel wie Airbags, Gurtstraffer, Überrollbügel oder Fußgängerschutzmittel derart zu beeinflussen, dass eine präzisere Ansteuerung erfolgt. Insbesondere sollen damit besser Nichtauslösecrashs erkannt werden. Im Folgenden wird dargelegt, wie die Erfindung funktioniert.

Der Ansatz besteht darin, ein Beschleunigungssignal $\alpha(t)$ mit seinem niederfrequenten Anteil $a\_LF(t)$ zu vergleichen. Der niederfrequente Anteil ist dabei durch eine Tiefpassfilterung aus dem ursprünglichen Signals $\alpha(t)$ zu gewinnen. Eine Möglichkeit für die Tiefpassfilterung stellt die Verwendung von gleitenden Mittelwerten über x Werte (Fensterintegrale der Länge x) dar. Die Übertragungscharakteristik der Fensterintegrale hat dabei die Besonderheit, dass die der inversen Fensterlänge entsprechende Frequenz nicht mehr übertragen wird. Beispielsweise hat ein Fensterintegral von 4ms Länge eine Nullstelle in der Übertragungsfunktion bei 250 Hz. Es ist daher vorteilhaft, den Grad der Tiefpassfilterung (im beschriebenen Beispiel über die Fensterlänge einstellbar) als Applikationsparameter variabel zu gestalten und nicht hart zu codieren.

Der hochfrequente Signalanteil ist durch $a\_HF(t) = a(t) - a\_LF(t)$ gegeben. Ein relatives Maß für die Dynamik des hochfrequenten Signalanteil erhält man nun, indem man den hochfrequenten Signalanteil absolut aufsummiert und in Relation zum absolut aufsummierten Gesamtsignal setzt.

$$\frac{AbsInt(a - a\_LF)}{AbsInt(a)} = \frac{\sum_i |a\_i - a\_LF,i|}{\sum_i |a\_i|} \qquad (1)$$

Die Berechnung der Absolutintegrale in Zähler und Nenner wird vorteilhafterweise erst gestartet, wenn die Startbedingung des Auslösealgorithmus überschritten wurde. Diese kann beispielsweise durch eine Schwelle auf das Beschleunigungssignal, eine Schwelle auf das Fensterintegral, oder aber durch komplexere Startbedingungen realisiert werden.

Im folgenden wird beschrieben, wie der vergleichsweise einfache Ansatz (1) grundlegend verbessert werden kann.

Grundlegend für das Verständnis hierfür ist, dass das tiefpassgefilterte Signal zweierlei grundsätzliche Eigenschaften besitzt:

a) Es kann entsprechend hochfrequenten Signalen von der Größenordnung seiner Grenzfrequenz nur noch teilweise folgen (reduzierte Amplitude).

b) Es hinkt dem Signal $\alpha(t)$ um eine gewisse Phasenverschiebung hinterher, im folgenden mit m Zyklen bezeichnet. Bei der Realisierung der Tiefpassfilterung über Fensterintegrale (Summe der letzten n Beschleunigungswerte) liegt das "Alter" der verwendeten Beschleunigungswerte zwischen 0 und n-1 Rechenzyklen. Das "mittlere Alter" und damit die Phasenverschiebung beträgt also bei dieser Realisierung $m=(n-1)/2$ Rechenzyklen. Selbst bei niederfrequenten Signalen, welche vom Tiefpassfilter fast vollständig durchgelassen werden, tritt diese Phasenverschiebung auf (siehe Fig..7)

Zur Bewertung des hochfrequenten Signalanteils ist allerdings nur die Eigenschaft a) von Belang. Die Eigenschaft b) sollte dagegen nicht bewertet werden, da sie eine notwendige Konsequenz der Tiefpassfilterung an sich ist.

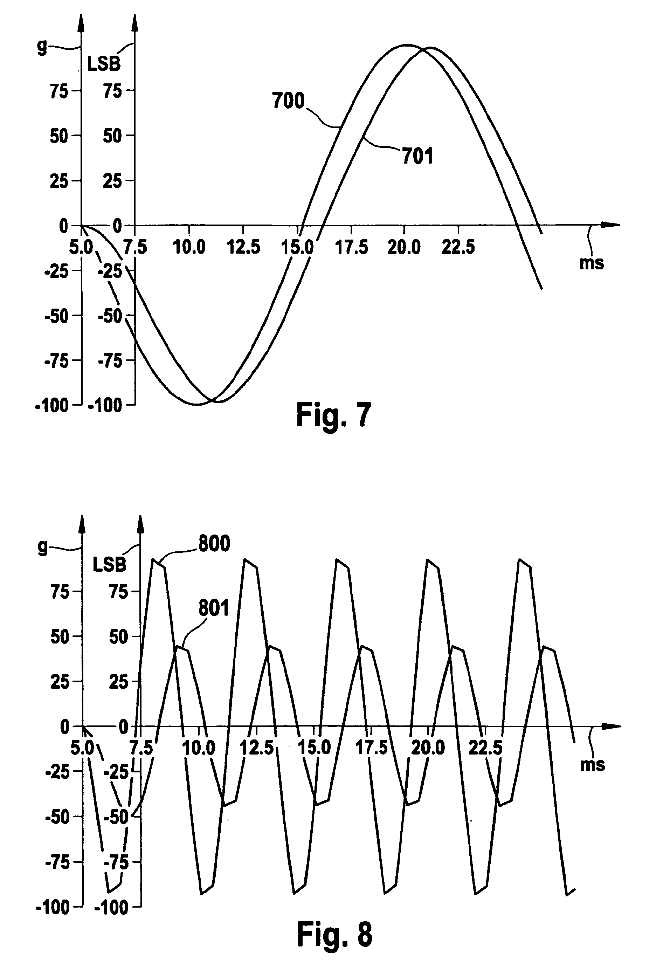

Dies ist in Fig. 8-9 nochmals dargestellt. In Fig.. 8 ist eine 250 Hz Schwingung sowie ihr gleitender Mittelwert über 5 Zyklen = 2.5 ms dargestellt, welcher dem Signal um (5-1)/2=2Zyklen=1 ms hinterherhinkt. Dies entspricht bei der 250Hz Schwingung gerade einer Viertelperiode, d.h. die Nulldurchgänge von $a\_LF(t)$ fallen auf die Extrema von $a(t)$ und umgekehrt. Man kann zeigen, dass hier die absolut aufsummierte Differenz $a\_HF(t)=a(t)-a\_LF(t)$ gerade dem absolut aufsummierten Gesamtsignal $a(t)$ entspricht (anders ausgedrückt: die absolute Differenzfläche zwischen den Kurven entspricht der absoluten Fläche unter der Kurve $a(t)$). Das bedeutet, dass das Merkmal (1) den Wert 1 annimmt. In Abb. 4 ist nun eine Schwingung mit 400Hz dargestellt. Diese Schwingung entspricht gerade einer Nullstelle in der Übertragungsfunktion des 2.5 ms Fensterintegrals, so dass nach dem Einschwingvorgang $a\_LF(t) = 0$ gilt. Damit nimmt das Merkmal (1) ebenfalls den Wert 1 an. D.h. mit Formel (1) können 250 Hz und 400 Hz Schwingungen nicht unterschieden werden, obwohl die 250 Hz Schwingung im Gegensatz zur 400 Hz Schwingung vom gleitenden Mittelwert mit ca. 47% ihrer Amplitude durchgelassen wird.

Daher ist Formel (1) dahingehend abzuändern, dass das Signal $\alpha(t)$ für den Vergleich mit $\alpha\_LF(t)$ um m Zyklen verzögert werden muss (Zwischenspeicherung). Dies soll im folgenden als retardiertes Signal bezeichnet werden,

$$a\_ret(t) = a(t - m\Delta t)$$

mit $\Delta t$=Rechenzykluszeit, z.B. 0.5 ms bzw. in diskreter Darstellung

$$a\_ret,i = a\_i - m.$$

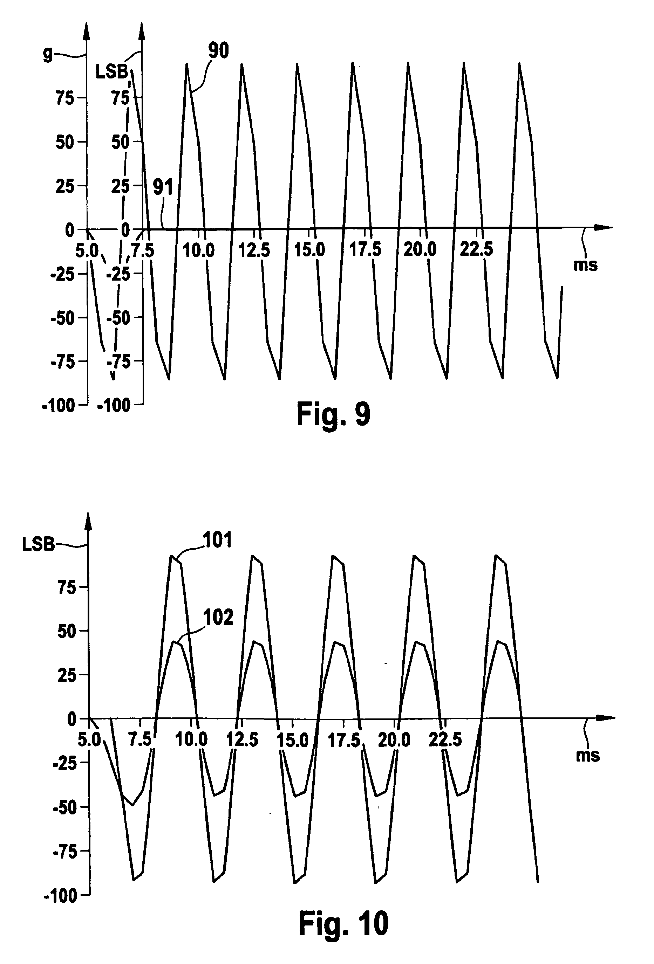

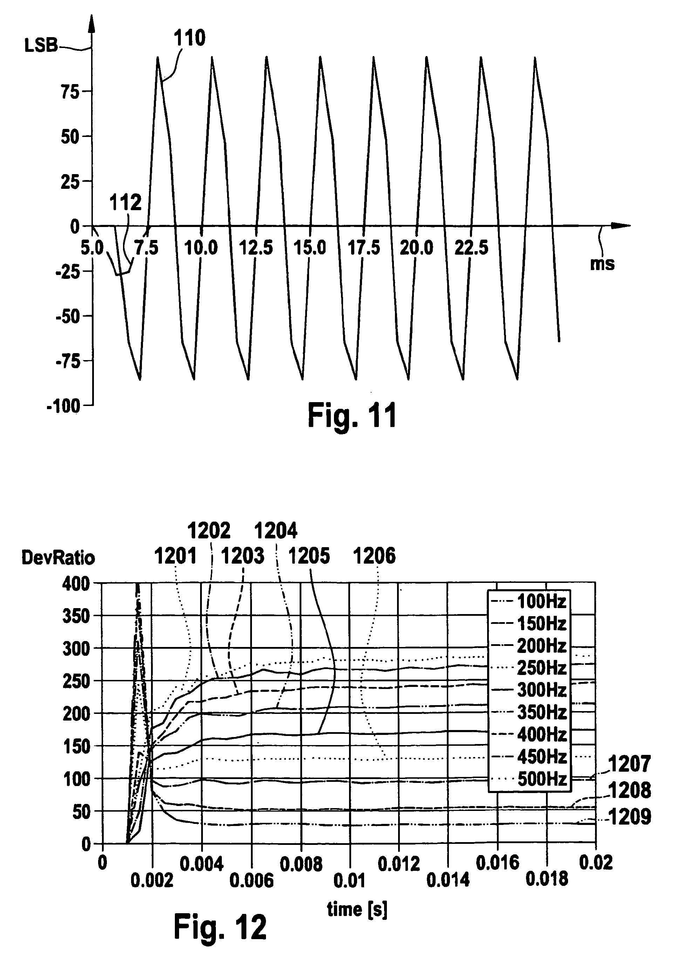

In Fig. 10 und 11 sind die retardierten Signale und der gleitende Mittelwert über 2.5 ms für Schwingungen von 250 Hz bzw. 400Hz dargestellt - nunmehr ist eine Unterscheidung dieser Schwingungen über das Verhältnis von Differenzfläche zu Gesamtfläche möglich.

Die Auswertung des Maßes (1) kann mit Verwendung des retardierten Signals aber nicht mit Algorithmusstart (Zyklus $i=1$) beginnen, sondern erst m Zyklen später (in Zyklus i=$1+m$). Anstelle von (1) erhalten wir also das wesentlich leitungsfähigere Merkmal

$$DevRatio = \frac{AbsInt\,(a\_ret - a\_LF)}{AbsInt\,(a\_ret)} = \frac{\sum\limits_{i=m+1}\left|a\_ret,i - a\_LF,i\right|}{\sum\limits_{i=m+1}\left|a\_ret,i\right|} = \frac{\sum\limits_{i=m+1}\left|a\_i - m - a\_LF,i\right|}{\sum\limits_{i=m+1}\left|a\_i - m\right|} \quad (2)$$

Dieses Verhältnis kann nun als die "Dynamik des hochfrequenten Signalanteils" gemessen in Relation zur "Dynamik des Gesamtsignals" interpretiert werden.

Für niederfrequente Signale deutlich unter der Grenzfrequenz der Tiefpassfilterung gilt $a\_ret \approx a\_LF$, und man erhält $DevRatio \approx 0$.

Für hochfrequente Signale sinkt *DevRatio* ab, und für Frequenzen um die Nullübertragungsfrequenz ($a\_LF \approx 0$) gilt *DevRatio* $\approx 1$.

Alternativ zu (2) kann nun auch die "Dynamik des hochfrequenten Signalanteils" in Relation zur "Dynamik des tieffrequenten Signalanteils" betrachtet werden,

$$DevRatio\ 2 = \frac{AbsInt\ (a\_ret - a\_LF)}{AbsInt\ (a\_LF)} = \frac{\sum_{i=m+1}|a\_ret.i - a\_LF.i|}{\sum_{i=m+1}|a\_LF.i|} = \frac{\sum_{i=m+1}|a\_i-m - a\_LF.i|}{\sum_{i=m+1}|a\_LF.i|}. \tag{3}$$

Für niederfrequente Signale deutlich unter der Grenzfrequenz der Tiefpassfilterung gilt $\alpha\_ret \approx \alpha\_LF$, und man erhält *DevRatio2* $\approx 0$.

Für hochfrequente Signale sinkt *DevRatio2* ab, und für Frequenzen um die Nullübertragungsfrequenz ($\alpha\_LF \approx 0$) gilt *DevRatio2* $\to \infty$.

Schlussendlich kann als Maß für die hochfrequenten Signalanteile auch die "Dynamik des Gesamtsignals" in Relation zur "Dynamik des tieffrequenten Signalanteils" betrachtet werden,

$$Dyn = \frac{AbsInt(a\_ret)}{AbsInt(a\_LF)} = \frac{\sum_{i=m+1}|a\_i-m|}{\sum_{i=m+1}|a\_LF,i|}. \tag{4}$$

Für niederfrequente Signale deutlich unter der Grenzfrequenz der Tiefpassfilterung gilt $a\_ret \approx a\_LF$, und man erhält $Dyn \approx 1$.

Für hochfrequente Signale steigt *Dyn* an, und für Frequenzen um die Nullübertragungsfrequenz ($a\_LF \approx 0$) gilt $Dyn \to \infty$.

Durch Vergleich von (2), (3) und (4) stellt man fest, dass die verschiedenen Kriterien die Gleichung

$$DevRatio2 = DevRatio \cdot Dyn$$

erfüllen. Damit sollte *DevRatio2* als das Produkt der beiden anderen Maße in den meisten Fällen die besten Diskriminierungseigenschaften für nieder- und hochfrequente Signale aufweisen. Dies zeigt sich auch im Wertebereich der Kriterien, wenn die Frequenz von Null auf die Nullübertragungsfrequenz hochgefahren wird: der Wertebereich ist dann

$$DevRatio = 0..1, \; Dyn = 1..\infty, \; DevRatio2 = 0..\infty.$$

In Fig. 12-14 sind *DevRatio, DevRatio2* und *Dyn* für Sinusschwingungen verschiedener Frequenz dargestellt.

Die Kriterien (2), (3) und (4) stellen allesamt ein Verhältnis zweier Größen dar. Im Steuergerätecode bietet es sich nun an, eine Schwellwertabfrage einer solchen Größe, z.B.

nominator/denominator < Schwellwert

in der Form

nominator < denominator * Schwellwert $\qquad$ (5)

auszudrücken. Damit wird die rechenzeitintensive Division umgangen.

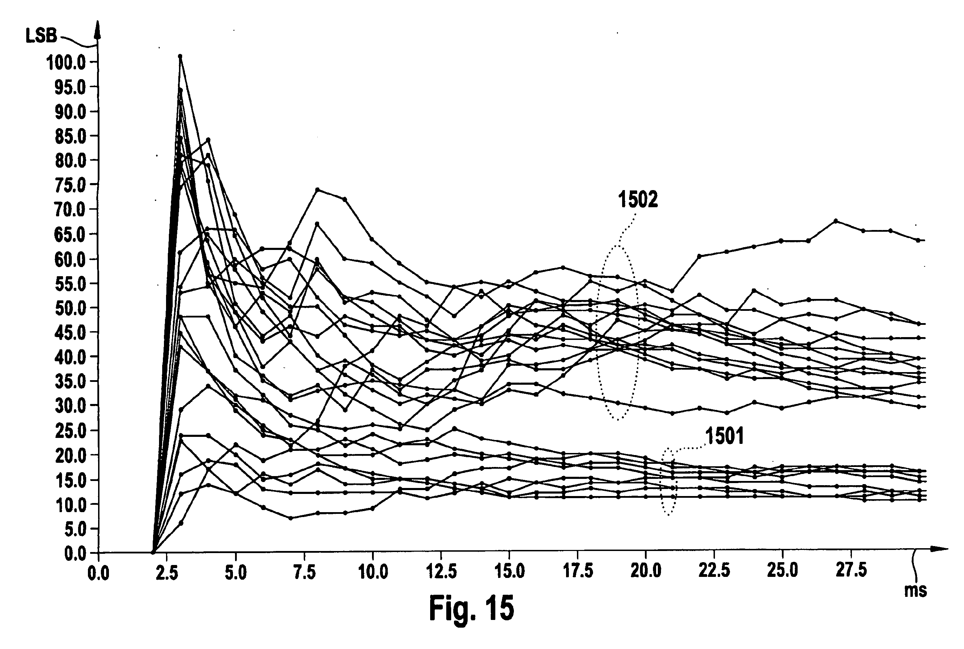

Als Beispiel für eine Signaldynamikauswertung ist in Fig. 15 das Kriterium (2) für Fahrzeugcrashs einer bestimmten Fahrzeugplattform gegenüber dem Algorithmustimer aufgetragen. Dargestellt sind Versicherungs-Nichtauslösecrashs AZT 16 km/h (schwarz) gegenüber Aulösecrashs vom Typ ODB (40 km/h grün, 56 km/h blau, 64 km/h rot). 20 Zyklen (10 ms) nach Algorithmusstart erlaubt die Signaldynamikauswertung des Zentralgehäusesensors eine eindeutige Trennung zwischen Auslöse- und Nichtauslösecrashs.

EP 1 955 911 B1

Für die Anwendung im Bereich im Bereich Fußgängerschutz werden typischerweise 2 oder 3 Beschleunigungssensoren eingesetzt. Hier stellt sich die Problematik, wie die Signaldynamik-Abschätzungen der einzelnen Sensorsignale unter Berücksichtigung ihrer Signalstärke miteinander kombiniert werden sollen. Nach Möglichkeit soll dabei die Division in den Kriterien (2), (3) und (4) vermieden werden.

Diese Anforderungen werden folgendermaßen erfüllt. Das Dynamikmaß (2) angewendet auf in diesem Beispiel drei unabhängige Sensoren (links, Mitte, rechts) ergibt zunächst die drei Einzelabschätzungen

$$DevRatio\_L = \frac{AbsInt(a\_ret, L - a\_LF, L)}{AbsInt(a\_ret, L)},$$

$$DevRatio\_R = \frac{AbsInt(a\_ret, R - a\_LF, R)}{AbsInt(a\_ret, R)}$$

und

$$DevRatio\_M = \frac{AbsInt(a\_ret, M - a\_LF, M)}{AbsInt(a\_ret, M)}.$$

Eine gewichtete Mittelung dieser drei Einzelkriterien ist nun so durchzuführen, dass die einzelnen Sensorsignale gemäß der "Dynamik des Gesamtsignals" gewichtet werden. Dies bedeutet, dass der Sensor mit der größten Dynamik am stärksten gewichtet wird. Damit ist sichergestellt, dass der bei einem Fußgängeraufprall nächstliegende Sensor, der typischerweise das stärkste Signal sieht, auch entsprechende stärker als die anderen Sensoren in die Signalanalyse eingeht.

Mit den normierten Gewichtsfaktoren

$$g\_i = \frac{AbsInt(a\_ret, i)}{\sum_{j} AbsInt(a\_ret, j)},$$

wobei die Indice $i$ und $j$ über die Sensorpositionen L, R, und M laufen, ergibt sich dann das Gesamtkriterium

$$DevRatio = \sum_{i} g\_i \cdot DevRatio\_i = \frac{\sum_{i} AbsInt(a\_ret, i - a\_LP, i)}{\sum_{i} AbsInt(a\_ret, i)}. \qquad (6)$$

Im Nenner werden die Absolutintegrale der retardierten Signale über alle Sensoren aufsummiert, im Zähler werden die Absolutintegrale der hochfrequenten Signalanteile über alle Sensoren aufsummiert.

Da (6) wiederum ein einfacher Quotient ist, kann eine Schwellwertabfrage wieder in der Form (5) unter Vermeidung einer Division dargestellt werden.

Das Dynamikmaß (3) kann auf ähnliche Weise auf mehrere Sensoren erweitert werden. Die Einzelergebnisse

$$DevRatio2\_i = \frac{AbsInt(a\_ret, i - a\_LF, i)}{AbsInt(a\_LF, i)} \text{ mit } i=L,R,M$$

7

Werden hier derart gewichtet, dass die einzelnen Sensorsignale gemäß der "Dynamik des niederfrequenten Signalanteils" gewichtet werden. Mit den normierten Gewichtsfaktoren

$$h\_i = \frac{AbsInt(a\_LF,i)}{\sum_i AbsInt(a\_LF,j)}$$

ergibt sich damit das Gesamtkriterium

$$DevRatio2 = \sum_i h\_i \cdot DevRatio2\_i = \frac{\sum_i AbsInt(a\_ret,i - a\_LF,i)}{\sum_i AbsInt(a\_LF,i)}. \quad (7)$$

Im Nenner werden die Absolutintegrale der niederfrequenten Signalanteile über alle Sensoren aufsummiert, im Zähler werden die Absolutintegrale der hochfrequenten Signalanteile über alle Sensoren aufsummiert.

Auch (7) ist ein einfacher Quotient, so dass eine Schwellwertabfrage wieder in der Form (5) unter Vermeidung einer Division dargestellt werden kann.

Auch die Einzelkriterien (4) mit Ergebnissen

$$Dyn\_i = \frac{AbsInt(a\_ret,i)}{AbsInt(a\_LF,i)}$$

können wiederum mit den Gewichtungsfaktoren $h\_i$ gemäß der "Dynamik des niederfrequenten Signalanteils" gewichtet werden,

$$Dyn = \sum_i h\_i \cdot Dyn\_i = \frac{\sum_i AbsInt(a\_i)}{\sum_i AbsInt(a\_LF,i)} \quad (8)$$

Im Nenner werden die Absolutintegrale der niederfrequenten Signalanteile über alle Sensoren aufsummiert, im Zähler werden die Absolutintegrale des retardierten Signals über alle Sensoren aufsummiert.

Auch(8) ist ein einfacher Quotient, so dass eine Schwellwertabfrage wieder in der Form (5) unter Vermeidung einer Division dargestellt werden kann.

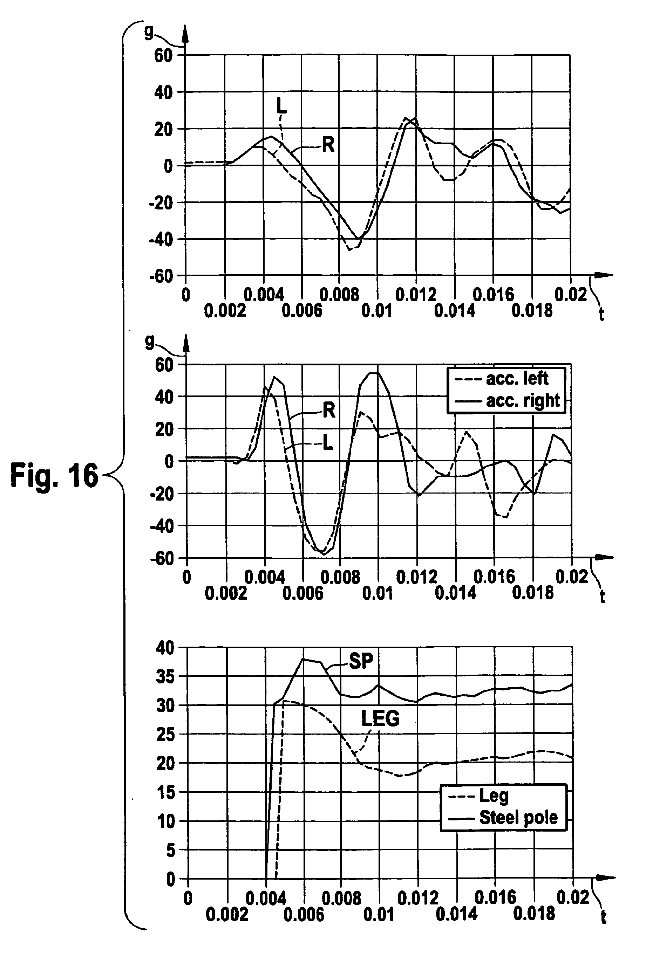

In Fig. 16 sind die Signale eines Fußgängerbeins (Lower Leg Impactor 13.4 kg) und eines Stahlpfostens vergleichbarer Masse (12.2 kg) bei einem mittigen Aufprall auf einen Fahrzeugstoßfänger bei einer Fahrzeuggeschwindigkeit von 20 km/h dargestellt. Die Auswertung der Signaldynamik beider Sensoren auf Basis von Gl. (7) erlaubt hier eine sichere Trennung dieser Objekte ab der 10. ms.

Alle beschriebenen Kriterien (2), (3), (4) bzw. (6), (7), (8) lassen sich als Schwellwertabfragen in der Form (5) darstellen.

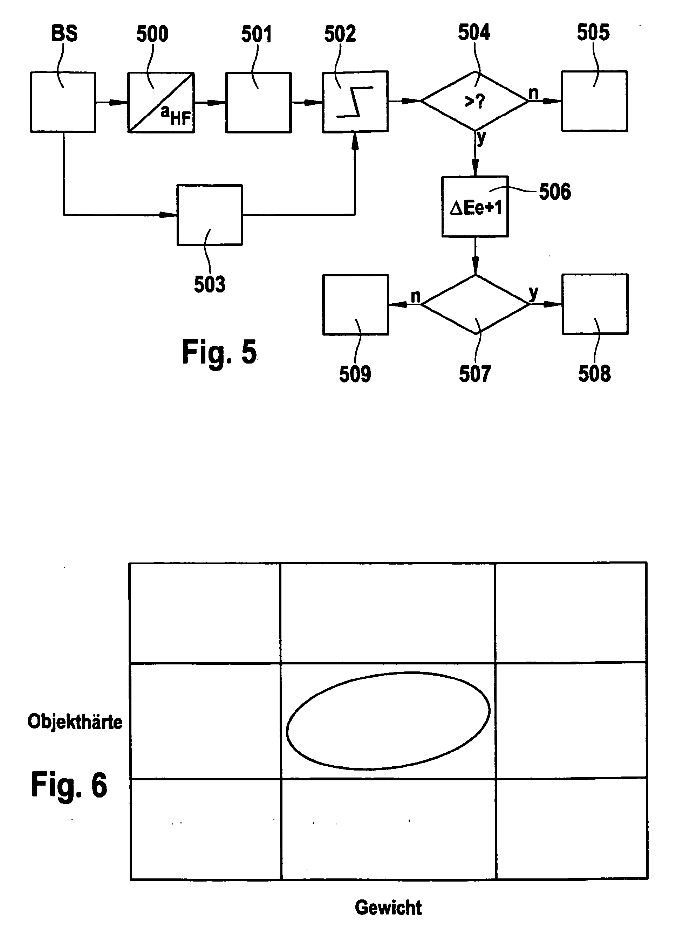

Fußgängerunfälle zeichnen sich im Vergleich zu harten Misuseobjekten durch eine geringere Signaldynamik aus (siehe auch Fig. 16), d.h. die Kriterien liegen unterhalb eines Schwellwerts. Um auch eine Trennbarkeit gegenüber weicheren Misuseobjekten (z.B. loser Sandhaufen) zu gewährleisten, ist auch die Einführung eines unteren Schwellwerts vorteilhaft (siehe auch Fig. 6). Daher bietet sich eine Abfrage der Form

$$\text{denominator} * \text{Schwelle\_unten} < \text{nominator} < \text{denominator} * \text{Schwelle\_oben} \quad (9)$$

an.

Bei Fahrzeugcrashs haben Auslösecrashs eine höhere Signaldynamik als Nichtauslösecrashs (siehe auch Fig. 15), so dass hier für die Detektion von Auslösecrashs der untere Schwellwert in (9) die wichtigste Rolle spielt.

Da alle beschriebenen Kriterien normierte Kriterien sind, ist ihre Abhängigkeit von der Zeit, nachdem sich die Berechnung nach ein paar Rechenzyklen stabilisiert hat, relativ gering. Dies ist auch aus den auf Realdaten basierten Fig. 15 und 16 ersichtlich.

Der Vergleich der Form (5) oder (9) sollte daher erst erfolgen, nachdem sich die Berechnung stabilisiert hat. Dies kann einfacherweise dadurch realisiert werden, dass die Schwellwertabfrage nur in einem bestimmten Zeitfenster ausgewertet wird.

Eine Stabilisierung des Kriteriums tritt typischerweise erst dann auf, wenn der Nenner ein gewisses Maß erreicht hat (Division durch zu kleine Nenner führt zu Schwankungen des Kriteriums). Daher kann alternativ oder als Ergänzung zum Zeitfenster auch ein Wertebereichsfenster für den jeweiligen Nenner verwendet werden. (Hier ist zu beachten, dass die Nenner eines jeden der Kriterien ein Absolutintegral ist und daher monoton mit der Zeit anwächst).

Bei Fahrzeugcrashs, die sich im Gegensatz zu Fußgängerunfällen durch einen relativ gleichmäßigen Anstieg des ersten oder zweiten Integrals als Funktion der Zeit auszeichnen, kann anstelle oder als Ergänzung des Zeitfensters oder des Nenner-Wertebereichsfensters auch ein Wertebereichsfenster des ersten oder zweiten Integrals verwendet werden.

Innerhalb des so definierten Auswertefensters ändern sich die beschriebenen Kriterien nur noch wenig. Es ist daher zwar denkbar, die Schwellwerte in (5) oder (9) als Funktion der Zeit oder des ersten Integrals oder des zweiten Integrals oder des jeweiligen Nenners zu variieren - in den meisten Fällen genügt aufgrund der relativen Konstanz der Kriterien aber ein fester Schwellwert. Um dabei dennoch robust gegenüber einzelne Werteabweichungen zu sein, bietet sich ein Robustheitszähler an: dabei wird innerhalb des Auswertefensters gezählt, wie häufig die Schwellwertabfrage der Form (5) oder (9) erfüllt ist. Erst nachdem der Robustheitszähler einen Schwellwert übersteigt, wird das positive Ergebnis der Signaldynamikauswertung an den Hauptalgorithmus des Fußgängerschutzsystems bzw. des Airbagsteuergerätes übergeben.

Für die Anwendung im Bereich Fußgängerschutz ist es am geeignetsten, die auf den Formeln (6), (7) oder (8) beruhenden Schwellwertabfragen (5) bzw. (9) mit einem Schwellwert durchzuführen, der in Abhängigkeit von der CAN-Geschwindigkeit und/oder des erkannten Auftreffpunktes und/oder der aktuellen Umgebungstemperatur gewählt werden kann. Alternativ kann auch der Schwellwert konstant gehalten werden, und die Merkmale in Abhängigkeit von der CAN-Geschwindigkeit und/oder des erkannten Auftreffpunktes und/oder der aktuellen Umgebungstemperatur modifiziert werden.

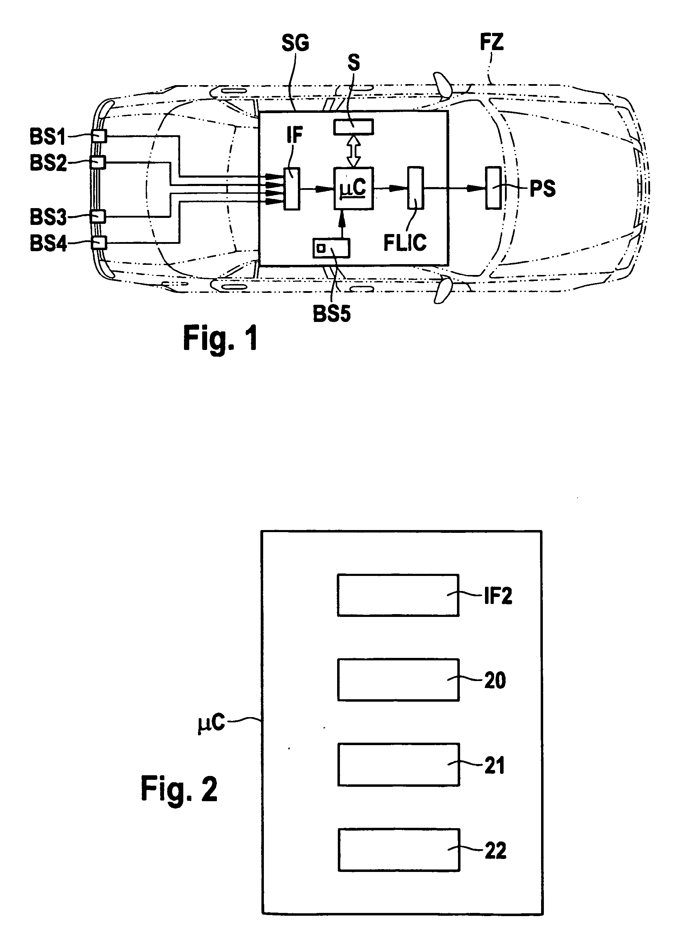

Figur 1 zeigt in einem Blockschaltbild die erfindungsgemäße Vorrichtung, die vorliegend als Steuergerät SG ausgebildet ist. Das Steuergerät SG ist dabei mit im Bereich des Stoßfängers angeordneten Beschleunigungssensoren BS1 bis BS4 verbunden und mit Personenschutzmitteln PS. Die Beschleunigungssensoren BS1 bis BS4 sind mikromechanisch hergestellt und weisen neben dem Sensorelement, das kapazitiv die Beschleunigung erfasst, eine Signalaufbereitung wie einen Messverstärker, eine Analog-Digital-Wandlung und einen Senderbaustein auf. Weitere Funktionen können implementiert sein. Die Energie erhalten die Beschleunigungssensoren BS1 bis BS4 vorliegend vom Steuergerät SG über die Datenübertragungsleitung. Damit liegt eine sogenannte Powerline-Datenübertragung vor. Vorliegend sind vier Beschleunigungssensoren vorgesehen, es ist möglich, weniger oder mehr Beschleunigungssensoren zu verwenden. Neben der Punkt-zu-Punkt-Verbindung, die hier von den Sensoren zum Steuergerät SG vorgesehen ist, kann auch eine Busverbindung oder eine Funkverbindung gewählt werden.

Die Beschleunigungssensoren BS1 bis BS4 sind an das Steuergerät SG über eine Schnittstelle IF angeschlossen. Die Schnittstelle IF ist vorliegend als integrierter Baustein ausgebildet. Es ist möglich, diese Schnittstelle diskret oder aus mehreren integrierten Bausteinen oder als Softwareschnittstelle auszubilden. Die Schnittstelle IF sorgt dafür, dass die Sensorsignale zum Mikrocontroller $\mu$C über einen sogenannten SPI- (Serial Peripherial Interface) Bus übertragen werden. Auch andere Übertragungsmöglichkeiten können genutzt werden.

Der Mikrocontroller $\mu$C verarbeitet die Beschleunigungssignale mittels des Speichers S und einem aus dem Speicher S geladenen Algorithmus. Daher weist der Speicher S flüchtige und nichtflüchtige Bereiche auf. Diese können auch getrennt ausgebildet sein. Zusätzlich verwendet der Mikrocontroller $\mu$C das Signal eines im Steuergerät SG befindlichen Beschleunigungssensors BS5, der über eine Softwareschnittstelle an den Mikrocontroller $\mu$C angebunden ist. Dabei kann die Übertragung vom Beschleunigungssensor BS5 zum Mikroncontroller $\mu$C analog oder digital ausgebildet sein, wobei bei einer analogen Übertragung der Mikrocontroller $\mu$C selbst eine Analog-Digital-Wandlung aufweist. Der Beschleunigungssensor BS5 ist in Fahrzeuglängsrichtung empfindlich. Es ist möglich, andere Empfindlichkeitsachsen zusätzlich oder anstatt zu verwenden, auch weitere Beschleunigungs- und Drehratensensoren können vorgesehen sein.

Neben den hier dargestellten Sensoren können auch Umfeldsensoren, Seitenaufprallsensoren wie Luftdrucksensoren und eine Insassensensierung vorgesehen sein, wobei diese Sensierungsmöglichkeiten ihre Daten an den Mikrocontroller $\mu$C übertragen. In Abhängigkeit von all diesen Sensorsignalen wertet der Mikrocontroller $\mu$C diese mittels seiner Algorithmen aus und erzeugt bei einem Auslösefall ein Ansteuerungssignal, das ebenfalls über den SPI-Bus an eine Ansteuerschaltung FLIC übertragen wird. In Abhängigkeit von diesem Ansteuersignal sorgt die Ansteuerschaltung FLIC für eine Auslösung der entsprechenden Personenschutzmittel PS.

Der Mikrocontroller μC führt das erfindungsgemäße Verfahren aus. Dabei führt er nicht nur einen Auslösealgorithmus durch, sondern eine besondere Bewertung der Signale, indem er vorliegend das Beschleunigungssignal in zwei Frequenzbereiche aufteilt und dabei jeweils in diesen Frequenzbereichen die Dynamik bestimmt und diese Dynamiken in ein Verhältnis setzt. Dem liegt die oben genannten Erkenntnis zugrunde, dass insbesondere das hochfrequente Signal Informationen darüber hat, ob es sich um ein hartes oder weiches Objekt oder ein Nichtauslöse- oder Auslösecrash handelt. Zur Bestimmung der Dynamik des Beschleunigungssignals beziehungsweise eines hoch- oder niederfrequenten Anteils davon kann das absolut aufsummierte Beschleunigungssignal beziehungsweise eines hoch- oder niederfrequenten Anteils davon verwendet werden. Um eine bessere Trennung von Frequenzen zu erreichen ist es vorteilhaft, den hochfrequenten Anteil oder das gesamte Unfallsignal mit einer zeitlichen Verzögerung zu versehen.

Das Verhältnis der Dynamiken wird dann mit einem Schwellwert verglichen um zu bestimmen, ob eine Beeinflussung in Abhängigkeit von dieser Dynamikbetrachtung des Hauptauslösealgorithmus notwendig ist. Um dabei eine Division bei der Verhältnisbildung zu vermeiden, wird einfach dann der Schwellwert mit dem Nenner des Verhältnisses bewertet. Der Schwellwert kann dabei konstant oder adaptiv ausgeführt sein. Die Adaption kann in Abhängigkeit vom Beschleunigungssignal vom ersten oder zweiten Integral oder von weiteren Parametern wie der Fahrzeuggeschwindigkeit, die über den CAN-Bus ermittelbar ist, vorgenommen werden.

Um das Verfahren besonders robust auszuführen, wird ein Zähler vorgesehen, der in Abhängigkeit von diesem Schwellwertvergleich inkrementiert wird, d. h. umso öfter oder umso länger dieser Schwellwert übertroffen wird, umso mehr wird der Zähler inkrementiert. Auch dieser Zähler wird mit einem entsprechenden Schwellwert verglichen um festzustellen, ob die Verhältnisbetrachtung stabil ist.

Werden wie vorliegend mehrere Sensorsignale berücksichtigt, dann werden die Dynamiken der einzelnen Sensorsignale gewichtet, und zwar in der oben angegebenen Weise.

Figur 2 zeigt einige Softwareelemente, die der Mikrocontroller μC verwendet. Dazu gehört die Softwareschnittstelle IF2, das Auswertemodul 20, dass das Beschleunigungssignal derart auswertet, ob die Ansteuerung erfolgen soll oder nicht, das Bewertungsmodul 21, das in der erfindungsgemäßen Art und Weise die Signaldynamiken bewertet und das Ansteuermodul 22, das letztlich das Ansteuersignal erzeugt. Weitere Softwaremodule können vorgesehen sein. Diese Software kann auch auf einem Datenträger als Computerprogramm abgespeichert werden. Als Datenträger kommen magnetische, magnetooptische, optische oder elektronische Speicher in Frage.

Figur 3 zeigt in einem Flussdiagramm das erfindungsgemäße Verfahren. In Verfahrensschritt 300 wird das Unfallsignal mittels der Sensoriken BS1 bis BS5 erzeugt und in Verfahrensschritt 301 der erfindungsgemäßen Bewertung unterzogen. In Verfahrensschritt 302 wird der Ansteuerungsalgorithmus mit dem Unfallsignal durchgerechnet, wobei die Bewertung gegebenenfalls Einfluss auf diesen Ablauf, beispielsweise durch die Verstellung der Schwellwerte nimmt. In Verfahrensschritt 303 erfolgt dann gegebenenfalls die Ansteuerung der Personenschutzmittel PS.

Figur 4 erläutert in einem Signalablaufdiagramm ein Beispiel für den erfindungsgemäßen Ablauf. Das Beschleunigungssignal wird im Block 400 gefiltert, so dass nur noch ein hochfrequenter Anteil a_HF übrig bleibt, der einem Schwellwertentscheider 401 zugeführt wird. Der Schwellwert im Schwellwertentscheider 401 wird mit dem Beschleunigungssignal BS bewertet, wobei eine Anpassung dieses Schwellwerts gleichzeitig durch den Block 402 erfolgt, und zwar beispielsweise in Abhängigkeit von der Geschwindigkeit, die über den CAN-Bus CAN erfassbar ist, in Abhängigkeit von Umfeldsignalen einer Umfeldsensorik U oder in Abhängigkeit vom Temperatursignal T. Der Schwellwertvergleich erfolgt jedoch anhand Dynamik der Signale, also des absolut aufintegrierten Beschleunigungssignals HF bzw. auch der Dynamik des Beschleunigungssignals BS; wobei diese Dynamikbestimmung im Block 401 zusätzlich durchgeführt wird.

In Verfahrensschritt 404 wird dann geprüft, ob dieser Schwellwert im Block 401 überschritten wurde. Ist das nicht der Fall, dann endet in Verfahrensschritt 407 das Verfahren. Ist das jedoch der Fall, dann wird auf einen Schwellwertentscheider 406 Einfluss genommen. Dieser Schwellwertentscheider 406 wird verwendet um zu prüfen, ob ein Ansteuerungssignal erzeugt werden soll oder nicht. Dazu wird der Schwellwert mit einem verarbeiteten Beschleunigungssignal in Block 405 verglichen. Dabei kann es sich beispielsweise um das erste Integral, also ein Geschwindigkeitssignal handeln. Auch eine gewichtete Mittelung oder andere alternative Maßnahmen sind möglich, auch das zweite Integral hat sich als vorteilhaft erwiesen. In Verfahrensschritt 408 wird nun geprüft, ob der Schwellwert in Verfahrensschritt 406 überschritten wurde. Ist das nicht der Fall, dann endet das Verfahren in Verfahrensschritt 407. Wurde in Verfahrensschritt 408 festgestellt, dass der Schwellwert im Schwellwertentscheider 406 überschritten wurde, dann erfolgt die Erzeugung des Ansteuerungssignals in Verfahrensschritt 409.

Figur 5 zeigt ein weiteres Signalablaufdiagramm. Dabei wird wiederum das Beschleunigungssignal BS im Block 500 einer Filterung unterzogen, so dass ein hochfrequenter Anteil a_HF übrig bleibt. Dieser wird einer Dynamikbestimmung in Verfahrensschritt 501 über Bildung des Absolutintegrals unterzogen. Parallel dazu wird das Beschleunigungssignal in Block 503 ebenfalls einer Dynamikbestimmung unterzogen. In Verfahrensschritt 502 erfolgt dann der Vergleich mittels des Schwellwerts. Dieser ist vorliegend konstant ausgeführt. Wiederum, um eine Division zu vermeiden, wird der Schwellwert mit dem Dynamikwert des Beschleunigungssignals BS bewertet und verglichen, ob dieser kleiner als die Dynamik des hochfrequenten Signals ist. In Verfahrensschritt 504 wird dies dann geprüft. Ist das nicht der Fall, endet das Verfahren in Verfahrensschritt 505. Ist das der Fall, dann wird in Verfahrensschritt 506 die Zeit gezählt, die der Schwellwert überschritten wurde. Dies wird für ein bestimmtes Zeitfenster durchgeführt. In Verfahrensschritt 507 wird geprüft, ob dieser Zähler über einem vorgegebenen weiteren Schwellwert ist um festzustellen, ob die Schwellwertüberschreitung als robust zu bezeichnen ist. Ist das der Fall, erfolgt in Verfahrensschritt 508 die oben dargestellte Beeinflussung des Hauptalgorithmus. Ist das nicht der Fall, endet in Verfahrensschritt 509 das Verfahren.

Figur 6 zeigt, wie oben dargestellt, ein Steifigkeitsmassediagramm, wobei sich im mittleren Feld der Mensch bewegt, wobei der Erwachsene im rechten oberen Teil dieses Feldes und das sechsjährige Kind im linken unteren Teil sich befinden. Im ersten Feld, also mit der geringsten Steifigkeit und der geringsten Masse würde beispielsweise ein Ball zugeordnet werden. Im Feld darüber ein Vogel, eine Katze und darüber ein Golfball. Im Feld über den Menschen ist eine Mülltonne und ein großer Stahlpfosten zuzuordnen. Im Feld rechts davon ein anderes Fahrzeug oder eine Wand.

Figur 7 zeigt ein Signalzeitdiagramm, wobei die Schwingung 700 eine 500 Hz-Schwingung ist und die Schwingung 701 ein gleitender Mittelwert über fünf Werte, wobei der gleitende Mittelwert 1 ms, das sind vorliegend zwei Zyklen, hinterherhinkt und 98 % der Signalamplitude durchlässt.

Figur 8 zeigt ein weiteres Signalzeitdiagramm, wobei eine 250 Hz- Schwingung 800 und ein gleitender Mittelwert 801 dargestellt sind. Auch hier hinkt, wie oben dargestellt, der gleitende Mittelwert 1 ms hinterher, aber bei dieser Frequenz lässt der gleitende Mittelwert nur noch 47% der Signalamplitude durch. Dies zeigt die Notwendigkeit der Signalverzögerung bzw. Retardierung.

Figur 9 zeigt eine 400 Hz -Schwingung 90 und einen gleitenden Mittelwert 91, wobei die 400 Hz gerade der Nullübertragungsfrequenz eines 2,5 ms Fensterintegrals entsprechen. Nach dem Einschwingvorgang ist daher der gleitende Mittelwert gleich Null, der über fünf Werte gleich 2,5 ms genommen wurde.

Figur 10 zeigt ein weiteres Signalzeitdiagramm, wobei eine um 1 ms retardierte 250 Hz-Schwingung 101 und ein gleitender Mittelwert über fünf Werte gleich 2,5 ms 102 dargestellt ist.

Figur 11 zeigt eine um 1 ms verzögerte 400 Hz-Schwingung 110 und einen gleitenden Mittelwert über fünf Werte gleich 2,5 ms 112.

Figur 12 zeigt das Ergebnis einer Signaldynamikauswertung für Sinuskurven mit Frequenzen von 100 Hz bis 500 Hz. Dabei entspricht das Signal 1201 500 Hz und das Signal 1209 100 Hz. Die Signale dazwischen sind jeweils um 50 Hz, ausgehend von 100 Hz, erniedrigt.

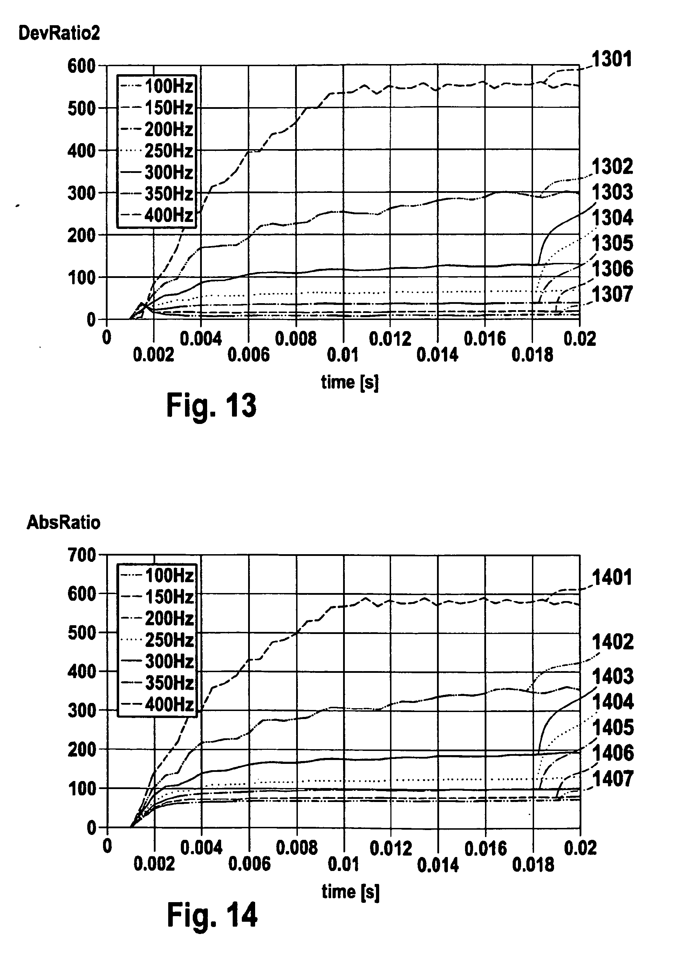

Figur 13 zeigt das Ergebnis einer Signaldynamikauswertung für Sinuskurven mit Frequenzen von 100 Hz, hier die niedrigste Kurve 1307, bis 400 Hz sind 1301.

Figur 14 zeigt das Ergebnis einer Signaldynamikauswertung für Sinuskurven mit Frequenzen von 100 Hz 1407 bis 400 Hz 1401.

Figur 15 zeigt das Ergebnis der Signaldynamikauswertung nach der Formel 2 für Fahrzeugcrashs: Nichtauslösecrash 1501 gegenüber Auslösecrash 1502. Nach zwanzig Zyklen, das sind 10 ms nach Algorithmusstart, ist eine eindeutige Trennung zwischen Auslöse- und Nichtauslösecrashs möglich. Ab diesem Zeitpunkt ist die Auswertung daher robust.

Figur 16 zeigt im oberen Diagramm das Beschleunigungssignal des linken und des rechten Beschleunigungssensors mit L bzw. R bezeichnet. Dies ist der Test für das sogenannte Lower- Leg-Kriterium bei 13,4 kg bei 20 km/h. Das Diagramm in der Mitte zeigt wiederum das Beschleunigungssignal für rechts und links mit R und L bezeichnet, diesmal jedoch für den Stahlpfosten bei 12,2 kg bei 20 km/h. Im unteren Diagramm ist die Signaldynamikabschätzung gemäß Formel 7 für die beiden Kriterien dargestellt, und zwar sind die Kurven hier mit LEG und SP für Stahlpfosten und das Lower-Leg-Kriterium jeweils bezeichnet.

**Patentansprüche**

1. Verfahren zur Ansteuerung von Personenschutzmitteln (PS) in Abhängigkeit von einer Auswertung von wenigstens einem Unfallsignal (BS), **dadurch gekennzeichnet, dass** die Auswertung in Abhängigkeit von einem Verhältnis einer jeweiligen Dynamik des nach zwei Frequenzbereichen aufgeteilten, wenigstens einen Unfallsignals beeinflusst wird, wobei sich die zwei Frequenzbereiche in wenigstens einem dritten Frequenzbereich unterscheiden.

2. Verfahren nach Anspruch 1, **dadurch gekennzeichnet, dass** das Verhältnis aus einem hochfrequenten und/oder niederfrequenten Anteil und/oder dem gesamten Unfallsignal gebildet wird, wobei eine zeitliche Verzögerung bei einer Bestimmung des hochfrequenten Anteils oder des gesamten Unfallsignals eingefügt wird.

3. Verfahren nach Anspruch 1 oder 2, **dadurch gekennzeichnet, dass** die jeweilige Dynamik durch Aufsummation der Anteile oder des gesamten Unfallsignals ermittelt wird.

**4.** Verfahren nach einem der vorhergehenden Ansprüche, **dadurch gekennzeichnet, dass** die Beeinflussung der Auswertung derart vorgenommen wird, dass wenigstens ein erster Schwellwert in Abhängigkeit von dem Verhältnis verändert wird.

**5.** Verfahren nach einem der vorhergehenden Ansprüche, **dadurch gekennzeichnet, dass** die Beeinflussung in Abhängigkeit von einem Vergleich des Verhältnisses mit einem zweiten Schwellwert vorgenommen wird.

**6.** Verfahren nach Anspruch 5, **dadurch gekennzeichnet, dass** in einem vorgegebenen Zeitfenster ein Zähler in Abhängigkeit von dem Vergleich inkrementiert wird.

**7.** Verfahren nach einem der vorhergehenden Ansprüche, **dadurch gekennzeichnet, dass** das Verhältnis für mehrere Unfallsignale durch eine gewichtetete Summe gebildet wird.

**8.** Verfahren nach einem der Ansprüche 6 oder 7, **dadurch gekennzeichnet, dass** der zweite Schwellwert in Abhängigkeit von einer Fahrzeuggeschwindigkeit und/oder eines Auftreffpunkts oder einer Umgebungstemperatur verändert wird.

**9.** Vorrichtung zur Ansteuerung von Personenschutzmitteln (PS) mit:

- wenigstens einer Schnittstelle (IF1, IF2), die wenigstens ein Unfallsignal (BS) von einer Unfallsensorik (BS1 bis BS5) bereitstellt
- einer Auswerteschaltung ($\mu$C), die in Abhängigkeit von dem wenigstens einen Unfallsignal (BS) ein Ansteuerungssignal erzeugt
- eine Ansteuerungsschaltung, die in Abhängigkeit von dem Ansteuerungssignal die Personenschutzmittel (PS) ansteuert, **dadurch gekennzeichnet, dass** die Auswerteschaltung ($\mu$C) derart konfiguriert ist, dass die Auswerteschaltung ($\mu$C) die Erzeugung des Ansteuerungssignals in Abhängigkeit von einem Verhältnis einer jeweiligen Dynamik des nach zwei Frequenzbereichen aufgeteilten wenigstens einen Unfallsignals beeinflusst, wobei sich die zwei Frequenzbereiche in wenigstens einem dritten Frequenzbereich unterscheiden.

**10.** Computerprogramm, das alle Schritte eines Verfahrens nach einem der Ansprüche 1 bis 8 ausführt, wenn es auf einem Steuergerät (SG) abläuft.

**11.** Computerprogrammprodukt mit Programmcode, der auf einem maschinenlesbaren Träger gespeichert ist zur Durchführung des Verfahrens nach einem der Ansprüche 1 bis 8, wenn das Programm auf einem Steuergerät ausgeführt wird.

**Claims**

**1.** Method for actuating personal protection means (PS) on the basis of evaluation of at least one accident signal (BS), **characterized in that** the evaluation is influenced on the basis of a relationship of respective dynamics of the at least one accident signal which has been divided into two frequency ranges, the two frequency ranges differing in at least a third frequency range.

**2.** Method according to Claim 1, **characterized in that** the relationship is formed from a high-frequency and/or low-frequency portion and/or the entire accident signal, a time delay being inserted when determining the high-frequency portion or the entire accident signal.

**3.** Method according to Claim 1 or 2, **characterized in that** the respective dynamics are determined by summing the potions or the entire accident signal.

**4.** Method according to one of the preceding claims, **characterized in that** the evaluation is influenced in such a manner that at least one first threshold value is changed on the basis of the relationship.

**5.** Method according to one of the preceding claims, **characterized in that** the influencing is effected on the basis of a comparison of the relationship with a second threshold value.

**6.** Method according to Claim 5, **characterized in that** a counter is incremented in a predefined time window on the basis of the comparison.

7. Method according to one of the preceding claims, **characterized in that** the relationship is formed for a plurality of accident signals by a weighted sum.

8. Method according to either of Claims 6 and 7, **characterized in that** the second threshold value is changed on the basis of a vehicle speed and/or a point of impact or an ambient temperature.

9. Device for actuating personal protection means (PS), having:

- at least one interface (IF1, IF2) which provides at least one accident signal (BS) from an accident sensor system (BS1 to BS5),
- an evaluation circuit ($\mu$C) which generates an actuation signal on the basis of the at least one accident signal (BS),
- an actuation circuit which actuates the personal protection means (PS) on the basis of the actuation signal, **characterized in that** the evaluation circuit ($\mu$C) is configured in such a manner that the evaluation circuit ($\mu$C) influences the generation of the actuation signal on the basis of a relationship of respective dynamics of the at least one accident signal which has been divided into two frequency ranges, the two frequency ranges differing in at least a third frequency range.

10. Computer program which carries out all steps of a method according to one of Claims 1 to 8 when it is executed on a control device (SG).

11. Computer program product with program code, which is stored on a machine-readable carrier, for carrying out the method according to one of Claims 1 to 8 when the program is executed on a control device.

## Revendications

1. Procédé de commande de moyens de protection de personnes (PS) en fonction d'une interprétation d'au moins un signal d'accident (BS), **caractérisé en ce que** l'interprétation est influencée en fonction d'un rapport d'une dynamique respective de l'au moins un signal d'accident divisé en fonction de deux plages de fréquences, les deux plages de fréquences se différenciant en au moins une troisième plage de fréquences.

2. Procédé selon la revendication 1, **caractérisé en ce que** le rapport est formé d'une part à haute fréquence et/ou à basse fréquence et/ou du signal d'accident complet, un retard dans le temps étant inséré lors d'une détermination de la part à haute fréquence ou du signal d'accident complet.

3. Procédé selon la revendication 1 ou 2, **caractérisé en ce que** la dynamique respective est déterminée par totalisation des parts ou du signal d'accident complet.

4. Procédé selon l'une des revendications précédentes, **caractérisé en ce que** l'influence de l'interprétation est effectuée de telle sorte qu'au moins une première valeur de seuil est modifiée en fonction du rapport.

5. Procédé selon l'une des revendications précédentes, **caractérisé en ce que** l'influence est effectuée en fonction d'une comparaison du rapport avec une deuxième valeur de seuil.

6. Procédé selon la revendication 5, **caractérisé en ce que** dans un créneau temporel prédéfini, un compteur est incrémenté en fonction de la comparaison.

7. Procédé selon l'une des revendications précédentes, **caractérisé en ce que** le rapport est formé pour plusieurs signaux d'accident par un total pondéré.

8. Procédé selon l'une des revendications 6 ou 7, **caractérisé en ce que** la deuxième valeur de seuil est modifiée en fonction d'une vitesse du véhicule et/ou d'un point d'impact ou d'une température ambiante.

9. Dispositif de commande de moyens de protection de personnes (PS) comprenant :

- au moins une interface (IF1, IF2) qui délivre au moins un signal d'accident (BS) provenant d'un dispositif de détection d'accident (BS1 à BS5),
- un circuit d'interprétation (µC) qui génère un signal de commande en fonction de l'au moins un signal d'accident (BS),
- un circuit de commande qui commande les moyens de protection de personnes (PS) en fonction du signal de commande, **caractérisé en ce que** le circuit d'interprétation (µC) est configuré de telle sorte que le circuit d'interprétation (µC) influence la génération du signal de commande en fonction d'un rapport d'une dynamique respective de l'au moins un signal d'accident divisé en fonction de deux plages de fréquences, les deux plages de fréquences se différenciant en au moins une troisième plage de fréquences.

10. Programme d'ordinateur qui exécute toutes les étapes d'un procédé selon l'une des revendications 1 à 8 lorsqu'il se déroule sur un contrôleur (SG).

11. Produit de programme d'ordinateur comprenant un code de programme qui est enregistré sur un support lisible par machine pour mettre en oeuvre le procédé selon l'une des revendications 1 à 8 lorsque le programme est exécuté sur un contrôleur.

Fig. 1

Fig. 2

**Fig. 3**

**Fig. 4**

BS    500    501    502    504    505

$a_{HF}$

503

>?    n

y

$\triangle Ee+1$ —— 506

509    n    y    508

507

**Fig. 5**

Objekthärte

**Fig. 6**

Gewicht

**Fig. 7**

**Fig. 8**

Fig. 9

Fig. 10

Fig. 11

Fig. 12

DevRatio2

**Fig. 13**

AbsRatio

**Fig. 14**

**Fig. 15**

EP 1 955 911 B1

## Fig. 16

**EP 1 955 911 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005036108 A
- DE 102004042467 A1